# EUROPÄISCHE PATENTSCHRIFT

(11) **EP 2 395 242 B1**
(45) Veröffentlichungstag und Bekanntmachung des Hinweises auf die Patenterteilung: **15.03.2017**
(21) Anmeldenummer: 11004736.2
(22) Anmeldetag: 09.06.2011
(51) Int. Cl.: F04B 1/12, F04B 1/28, F16H 61/00

(54) **Hydrostatisches Antriebssystem mit einer Speisepumpe**
Hydrostatic drive system with a feed pump
Système d'entraînement hydrostatique doté d'une pompe d'alimentation

(30) Priorität: 10.06.2010 DE 102010023331; 19.05.2011 DE 102011102006
(43) Veröffentlichungstag der Anmeldung: 14.12.2011
(73) Patentinhaber: Linde Hydraulics GmbH & Co. KG, 63743 Aschaffenburg (DE)
(72) Erfinder: Welschof, Bernward Dr., 63762 Grossostheim (DE); Krittian, Lukas, 63739 Aschaffenburg (DE); Schlosser, Robert, 63857 Waldaschaff (DE)
(74) Vertreter: Patentship Patentanwaltsgesellschaft mbH

(56) Entgegenhaltungen:
- DE-A1- 3 520 338
- DE-A1- 10 112 501
- DE-B- 1 934 519
- US-A- 3 480 099
- US-A- 3 650 291
- US-A- 5 419 130

## Beschreibung

Die Erfindung betrifft ein hydrostatisches Antriebssystem mit einem Antriebsmotor, mit einer von dem Antriebsmotor angetriebenen Arbeitshydraulikpumpe einer Arbeitshydraulik und/oder mit einer von dem Antriebsmotor angetriebenen Fahrpumpe eines hydrostatischen Fahrantriebs und mit einer von dem Antriebsmotor angetriebenen Speisepumpe, die einen als Konstantdrucknetz mit einem aufgeprägten Druck ausgebildeten Speisedruckkreis des Antriebssystems versorgt, wobei die Speisepumpe im offenen Kreislauf betrieben ist und aus einem Behälter Druckmittel ansaugt und in eine Förderleitung fördert.

Ein gattungsgemäßes Antriebssystem mit einer von einem Antriebsmotor angetrieben Fahrpumpe eines hydrostatischen Fahrantriebs und einer von dem Antriebsmotor angetriebenen Speisepumpe eines Speisedruckkreises ist aus der US 5 419 130 A bekannt.

Derartige Antriebssysteme werden in mobilen Arbeitsmaschinen, beispielsweise Flurförderzeugen, zur Versorgung eines Arbeitskreises, der mehrere Verbraucher einer Arbeitshydraulik und/oder eine hydraulische Lenkungseinrichtung umfasst, eingesetzt. Zudem kann das Antriebssystem einen Fahrantrieb, beispielsweise einen hydrostatischen Fahrantrieb, umfassen. Bei derartigen Antriebssystemen ist zudem ein Speisedruckkreis vorgesehen, der zur Versorgung von Verbrauchern mit einem konstanten Speisedruck dient. Die Verbraucher des Speisedruckkreises können beispielsweise eine hydraulische Betriebsbremse oder eine hydraulisch in eine Lösestellung lüftbare Feststellbremse sein. Sofern die Steuerventile zur Steuerung der Verbraucher der Arbeitshydraulik hydraulisch betätigbar sind, kann der Speisedruckkreis ebenfalls als Vorsteuerdruckquelle zur Erzeugung des Vorsteuerdrucks der Steuerventile verwendet werden. Bei Verwendung eines hydrostatischen Fahrantriebs im geschlossenen Fahrantrieb mit einer im Fördervolumen verstellbaren Verstellpumpe dient der Speisedruckkreis ebenfalls zur Versorgung einer Stelleinrichtung der als Verstellpumpe ausgebildeten Fahrpumpe und zur Versorgung einer Einspeiseinrichtung des geschlossenen Kreislaufs. Sofern als Pumpe zur Versorgung der Arbeitshydraulik und/oder der hydraulischen Lenkungseinrichtung eine im Fördervolumen verstellbare Verstellpumpe eingesetzt wird, dient der Speisedruckkreis ebenfalls zur Versorgung einer Stelleinrichtung dieser Verstellpumpe.

Zur Versorgung des Speisedruckkreises mit einem konstanten Speisedruck ist es bekannt, eine Konstantpumpe mit konstantem Fördervolumen als Speisepumpe einzusetzen, beispielsweise eine Zahnradpumpe in Außenzahnrad- oder Innenzahnradbauweise. Derartige Zahnradpumpen weisen einen geringen Herstellaufwand auf und sind entsprechend kostengünstig. Die Konstantpumpe ist zum Antrieb mit einem Antriebsmotor, beispielsweise einem als Dieselmotor ausgebildeten Verbrennungsmotor, trieblich verbunden und wird von diesem angetrieben. Durch die starre Kopplung der Speisepumpe mit dem Antriebsmotor liefert die als Konstantpumpe ausgebildete Speisepumpe einen Förderstrom, der proportional zu der Drehzahl des Antriebsmotors ist. Dieser drehzahlproportionale Förderstrom und somit aufgeprägte Volumenstrom der Speisepumpe wird ebenfalls ausgenutzt, um mittels einer Meßblende in der Förderleitung der Speisepumpe aus dem Förderstrom der Speisepumpe eine Drehzahlsignal zu erzeugen, das beispeisweise in einem automotiven hydrostatischen Fahrantrieb oder einer Retarderbremsschaltung als Steuersignal eingesetzt wird. Das Schluckvolumen der Speisepumpe ist hierbei derart dimensioniert, dass bereits bei geringen Drehzahlen des Antriebsmotors der erforderliche, konstante Speisedruck aufgebaut wird. Der mit zunehmender Drehzahl des Antriebsmotors überschüssig geförderte Förderstrom der Speisepumpe wird mittels eines der Förderleitung der Speisepumpe zugeordneten Druckbegrenzungsventils zum Behälter abgedrosselt. Durch das konstante Schluckvolumen bzw. Verdrängervolumen nimmt die Speisepumpe zum Antrieb ein im Wesentlichen über die Drehzahl konstantes Antriebsmoment von dem Antriebsmotor auf, wobei mit zunehmender Drehzahl des Antriebsmotors aufgrund des drehzahlproportionalen geförderten Volumenstroms die Antriebsleistung der Speisepumpe drehzahlproportional zunimmt. Sofern ab einer bestimmten Drehzahl der überschüssig geförderte Förderstrom der Speisepumpe über das Druckbegrenzungsventil abgedrosselt wird, stellt die für den Antrieb der Speisepumpe erforderliche Antriebsleistung eine Verlustleistung dar, die den Wirkungsgrad des Antriebssystems vermindert.

Diese Verluste können verringert werden, wenn zur Versorgung des als Konstantdrucknetz mit einem aufgeprägten Druck ausgebildeten Speisedruckkreises eine druckgeregelte Speisepumpe verwendet wird. Derartige Pumpen, die auch als Load-Sensing-Pumpen, beispielsweise als verstellbare Axialkolbenpumpen in Schrägscheibenbauweise, bekannt sind, verändern das Verdrängervolumen durch eine Hubverstellung der Kolben, beispielsweise durch Veränderung eines Schwenkwinkels einer Schrägscheibe, an der die Kolben abgestützt sind. Derartige Pumpen sind auf höchste Stellgeschwindigkeiten optimiert und weisen einen hohen Bauaufwand mit entsprechend hohen Herstellkosten auf, so dass derartige hubverstellbare Axialkolbenpumpen für den Ersatz einer kostengünstigen Zahnradpumpe als Speisepumpe zur Erzeugung eines konstanten Speisedruckes nicht in Frage kommen.

Die DE 1 934 519 B offenbart einen als hydrostatisches Getriebe mit einer Pumpe und einem Hydromotor, die im geschlossenen Kreislauf miteinander verbunden sind, ausgebildeten Fahrantrieb einer Arbeitsmaschine. Die Pumpe wird von einem Dieselmotor angetrieben. Um die Drehzahl des Hydromotors stufenlos einstellen und verändern zu können, sind die Pumpe und der Hydromotor mit federbelasteten Ausgleichskolben versehen, die durch Veränderung des Drucks in der Niederdruckseite auffüllbare Kammern bilden, so dass sich bei konstantem Verdrängerhub der Arbeitskolben der Pumpe und des Hydromotors durch Veränderung des Volumens der von dem Ausgleichskolben gebildeten Kammern die Drehzahl des Hydromotors stufenlos verändern lässt.

Der vorliegenden Erfindung liegt die Aufgabe zugrunde, ein Antriebssystem der eingangs genannten Gattung zur Verfügung zu stellen, bei dem mit geringem Bauaufwand und mit geringer Verlustleistung ein konstanter Speisedruck des Speisedruckkreises erzeugt werden kann.

Diese Aufgabe wird erfindungsgemäß dadurch gelöst, dass die Speisepumpe als hubkonstante und sauggedrosselte Kolbenpumpe ausgebildet ist. Der erfindungsgemäße Gedanke besteht somit darin, zur Versorgung des als Konstantdrucknetz mit einem aufgeprägten Druck ausgebildeten Speisedruckkreises eine sauggedrosselte Kolbenpumpe mit einem festen und somit konstanten Hub der Kolben zu verwenden. Eine derartige Kolbenpumpe mit einem konstanten und somit einem nicht verstellbaren Hub weist einen einfachen und kostengünstigen Aufbau auf.

Die Regelung des Verdrängervolumens und somit des Förderstroms der Kolbenpumpe erfolgt durch eine Saugdrosselung, mit der die Ansaugmenge der Kolbenpumpe und somit das Schluckvolumen pro Kolbenhub gesteuert bzw. geregelt werden kann. Mit einer erfindungsgemäßen sauggedrosselten, hubkonstanten Kolbenpumpe als Speisepumpe wird somit vermieden, dass mit zunehmender Antriebsdrehzahl der Speisepumpe überschüssig geförderter Förderstrom an einem Druckbegrenzungsventil zum Behälter abgedrosselt wird. Durch eine entsprechende Verringerung der Ansaugmenge und somit des Verdrängervolumens der Kolbenpumpe durch die Saugdrosselung kann somit die Fördermenge und der Förderstrom der Kolbenpumpe verringert und begrenzt werden, wodurch das zum Antrieb der Kolbenpumpe erforderliche Antriebsdrehmoment reduziert wird. Hierdurch wird eine drehmomentseitige Entlastung des Antriebsmotors erzielt. Durch die Reduzierung der Fördermenge und somit des Förderstroms wird zudem erzielt, dass die Antriebsleitung für die sauggedrosselte Kolbenpumpe zur Erzeugung des konstanten Speisedruckes mit zunehmender Drehzahl des Antriebsmotors im Wesentlichen Konstant bleibt. Insgesamt kann somit mit einer sauggedrosselten Kolbenpumpe, die ein konstantes Hubvolumen aufweist, mit geringem Bauaufwand eine Verringerung der Verlustleitung bei der Erzeugung des konstanten Speisedruckes in dem Speisedruckkreis und somit eine entsprechende Zunahme des Wirkungsgrades erzielt werden.

Gemäß einer bevorzugten Ausführungsform der Erfindung ist die sauggedrosselte Kolbenpumpe zur Veränderung des Förderstroms mit einer internen Volumenstrombegrenzung und/oder einer variablen Saugdrosseleinrichtung versehen. Mit einer internen Volumenstrombegrenzung kann auf einfache Weise erzielt werden, dass bei Erreichen einer Grenzdrehzahl der Antriebsdrehzahl die Befüllung der Verdrängerräume und damit die Ansaugmenge pro Saughub der Speisepumpe begrenzt und damit bei einem konstanten Speisedruckniveau die Leistungsaufnahme der Speisepumpe begrenzt wird. Mit einer derartigen internen Volumenstrombegrenzung kann somit oberhalb der Grenzdrehzahl der Förderstrom auf einen konstanten Wert begrenzt werden. Mit einer zusätzlichen variablen Saugdrosseleinrichtung, die der Einlassseite der Kolbenpumpe zugeordnet ist, kann die Befüllung der Kolbenpumpe und somit die Ansaugmenge pro Saughub der Kolben weiter verringert werden, wodurch eine stufenlose Reduzierung des von der Speisepumpe oberhalb der Grenzdrehzahl geförderten, konstanten Förderstrom erzielt werden kann. Mit einer derartigen variablen Saugdrosseleinrichtung kann somit der von der internen Volumenstrombegrenzung begrenzte maximale Förderstrom, der oberhalb der Grenzdrehzahl konstant ist, stufenlos reduziert werden, so dass eine weitere Reduzierung der Ansaugmenge der Verdrängerräume der Speisepumpe oberhalb der Grenzdrehzahl erzielt werden kann. Das erforderliche Antriebsmoment der Speisepumpe kann dadurch verringert werden und durch eine Konstanthaltung des gelieferten Förderstroms über die Drehzahl die Antriebsleistung mit zunehmender Drehzahl begrenzt und konstant gehalten werden. Mit einer derartigen variablen Saugdrosseleinrichtung kann somit erzielt werden, dass der konstante Förderstrom der Kolbenpumpe oberhalb der Grenzdrehzahl stufenlos reduziert und verringert werden kann, um das Antriebsmoment zu reduzieren und die Antriebsleitung für die Speisepumpe oberhalb der Grenzdrehzahl konstant halten zu können.

Gemäß einer bevorzugten Ausführungsform der Erfindung ist die variable Saugdrosseleinrichtung als bedarfsabhängige, insbesondere förderdruckabhängige, Saugdrosseleinrichtung ausgebildet. Mit einer derartigen förderdruckabhängigen Saugdrosseleinrichtung kann die Befüllung der Speisepumpe und somit die Ansaugmenge pro Saughub des Kolbens in Abhängigkeit von dem erzeugten Speisedruck und somit dem Förderdruck in der Förderleitung der Speisepumpe bedarfsabhängig gesteuert und eingestellt werden. Insbesondere bei Erreichen des konstanten Speisedruckes kann hierbei eine weitere Reduzierung der Ansaugmenge der Verdrängerräume der Speisepumpe und somit des Förderstroms der Speisepumpe erzielt werden, um das erforderlichen Antriebsmoments weiter zu verringern.

Hinsichtlich eines einfachen und kostengünstigen Aufbaus ergeben sich Vorteile, wenn gemäß einer bevorzugten Ausführungsform der Erfindung die Kolbenpumpe mindestens einen in einer Zylinderbohrung längsverschiebbare Kolben aufweist, wobei die interne Volumenstrombegrenzung von einer Kolbensteuerung an der Einlassseite gebildet ist. Mit einer Kolbensteuerung an der Saugseite kann auf einfache Weise die Ansaugmenge des Verdrängerraums gesteuert werden und erzielt werden, dass bei Erreichen einer Grenzdrehzahl lediglich eine Teilbefüllung des Verdrängerraums erfolgt, um das erforderlichen Antriebsmoments zu verringern und die von der Speisepumpe aufgenommenen Antriebsleistung zu begrenzen. Oberhalb der Grenzdrehzahl kann mit einer derartigen Kolbensteuerung an der Saugseite auf einfache Weise ein konstanter Förderstrom der Speisepumpe erzielt werden. Mit steigender Drehzahl der Speisepumpe verringert sich zwar im Saughub das Zeitfenster der Kolbensteuerung für die Befüllung des Verdrängerraums, wodurch die Ansaugmenge pro Kolbenhub verringert wird, durch die zunehmende Drehzahl der Speisepumpe wird dieser Effekt jedoch kompensiert, wodurch die Speisepumpe einen konstanten Förderstrom oberhalb der Grenzdrehzahl liefert.

Eine derartige Kolbensteuerung an der Saugseite kann auf einfache Weise erzielt werden, wenn der Kolben mit mindestens einer Ausnehmung versehen ist mittels der im Saughub der Verdrängerraum mit der Einlassseite verbindbar ist. Mit einer derartigen Kolbensteuerung kann durch entsprechende Dimensionierung der Ausnehmung im Kolben die Teilbefüllung des Verdrängerraums bei Erreichen der Grenzdrehzahl der Antriebsdrehzahl erzielt und eingestellt werden.

Bevorzugt ist hierzu die Einlassseite von einem Gehäuseinnenraum der Kolbenpumpe gebildet und ist die Ausnehmung als Querbohrung im Kolben ausgebildet, die im Saughub mit dem Gehäuseinnenraum in Verbindung steht. Mit einer oder mehreren derartiger Querbohrung im Kolben kann auf einfache Weise und mit geringem Bauaufwand eine Kolbensteuerung an der Einlassseite und eine interne Volumenstrombegrenzung erzielt werden.

Die variable Saugdrosseleinrichtung kann gemäß einer bevorzugten Ausführungsform der Erfindung von einem in einer Ansaugleitung angeordneten Drosselventil gebildet werden, das als in Zwischenstellungen drosselndes Steuerventil mit einer Durchflussstellung und einer Drosselstellung ausgebildet ist. Mit einem derartigen Drosselventil in der Ansaugleitung und somit an der Einlassseite kann eine weitere Reduzierung der Ansaugmenge und somit des gelieferten Förderstroms der Pumpe auf einfache Weise erzielt werden. Der von der Volumenstrombegrenzung oberhalb der Grenzdrehzahl auf ein konstantes Niveau begrenzte Förderstrom der Speisepumpe kann durch entsprechende Beaufschlagung des Drosselventils in Richtung der Drosselstellung auf einfache Weise stufenlos reduziert und verringert werden.

Gemäß einer bevorzugten Ausführungsform der Erfindung ist das Drosselventil mittels einer Feder in Richtung der Durchflussstellung und in Abhängigkeit von dem an der Auslassseite anstehenden Förderdruck in Richtung der Drosselstellung betätigbar. Mit einer derartigen, in der Ansaugleitung angeordneten Saugdrosseleinrichtung kann auf einfache Weise bei Erreichen des konstanten Speisedruckes durch eine entsprechende Beaufschlagung des Drosselventils in Richtung der Drosselstellung die Befüllung der Verdrängerräume und damit die Ansaugmenge der Speisepumpe bedarfsabhängig und somit förderdruckabhängig reduziert werden. Mit einer derartigen Saugdrosseleinrichtung kann somit der Förderstrom der erfindungsgemäßen Speisepumpe in Abhängigkeit vom Bedarf der Verbraucher des Speisedruckkreises eingestellt und an den Bedarf der Verbraucher angepasst werden.

Hinsichtlich eines einfachen Bauaufwandes ergeben sich weitere Vorteile, wenn die Kolbenpumpe mit einer Ventilsteuerung an der Auslassseite versehen ist. Eine derartige Ventilsteuerung der förderseitigen Auslassseite weist einen einfachen Bauaufwand auf und trägt weiter zu einem geringen Bauaufwand und Herstellaufwand der erfindungsgemäßen Speisepumpe bei.

Sofern gemäß einer bevorzugten Weiterbildung der Erfindung jedem Verdrängerraum eine Hülse zugeordnet ist, kann der Bauaufwand und der Bauraumbedarf weiter verringert und ein platzsparender Aufbau der erfindungsgemäßen Speisepumpe erzielt werden, wenn jeweils ein Auslassventil, insbesondere ein Rückschlagventil, der Ventilsteuerung in der dem jeweiligen Kolben zugeordneten Hülse angeordnet ist. Bei einer Kolbenpumpe kann der Bauaufwand durch die Integration des dem Verdrängerraum zugeordneten Auslassventils in eine entsprechende Hülse weiter verringert werden.

Die erfindungsgemäße Speisepumpe ist gemäß einer bevorzugten Ausgestaltungsform der Erfindung als Kolbenpumpe in Axialkolbenbauweise ausgebildet.

Bevorzugt ist hierbei die als Axialkolbenpumpe ausgebildete Kolbenpumpe in Taumelscheibenbauweise mit einem feststehenden Zylinderblock und einer angetriebenen Taumelscheibe ausgebildet, an der mindestens ein Kolben abgestützt ist, wobei ein Gehäuseinnenraum im Bereich der Taumelscheibe die Einlassseite bildet. Eine hubkonstante Kolbenpumpe in Taumelscheibenbauweise weist einen einfachen Aufbau mit geringem Herstellaufwand auf, wobei durch die Ausbildung des Gehäuseinnenraums als Einlassseite in Verbindung mit einer Kolbensteuerung an der Saugseite auf einfache Weise eine interne Volumenstrombegrenzung erzielt werden und in Verbindung mit den Hülsen mit integrierten Auslassventilen eine Ventilsteuerung der Auslassseite auf einfache Weise erzielt werden kann. Die bedarfsabhängige Saugdrosseleinrichtung kann hierbei der Einlassseite zugeordnet werden und bevorzugt in der zur Einlassseite geführten Ansaugleitung angeordnet werden.

Die erfindungsgemäße Speisepumpe kann gemäß einer alternativen Ausgestaltungsform der Erfindung als Kolbenpumpe in Radialkolbenbauweise ausgebildet sein.

Bevorzugt weist die als Radialkolbenpumpe ausgebildete Kolbenpumpe einen feststehenden Zylinderblock und eine angetriebene Exzenterscheibe auf, an der mindestens ein Kolben abgestützt ist, wobei ein Gehäuseinnenraum im Bereich der Exzenterscheibe die Einlassseite bildet. Eine derartige hubkonstante Radialkolbenpumpe weist einen einfachen Aufbau mit geringem Herstellaufwand auf, wobei durch die Ausbildung des Gehäuseinnenraums als Einlassseite in Verbindung mit einer Kolbensteuerung an der Saugseite auf einfache Weise eine interne Volumenstrombegrenzung erzielt werden kann. In Verbindung mit den Hülsen mit integrierten Auslassventilen kann ebenfalls eine Ventilsteuerung der Auslassseite auf einfache Weise erzielt werden. Die bedarfsabhängige Saugdrosseleinrichtung kann hierbei der Einlassseite zugeordnet werden und bevorzugt in der zur Einlassseite geführten Ansaugleitung angeordnet werden.

Zweckmäßigerweise ist der Speisedruckkreis mit einem Druckmittelspeicher versehen. Mit einem derartigen Druckmittelspeicher, beispielsweise einem Membranspeicher, können auf einfache Weise Volumenstromspitzen im Speisedruckkreis abgedeckt werden, so dass die erfindungsgemäße sauggedrosselten Kolbenpumpe lediglich eine geringe Dynamik für die Veränderung der Ansaugmenge und somit der bedarfsabhängigen Saugdrosseleinrichtung aufweisen muss, um die Verbraucher des Speisedruckkreis sicher zu versorgen. Dies trägt weiterhin zu einem kostengünstigen Bauaufwand der erfindungsgemäßen Speisepumpe bei.

Zweckmäßigerweise ist der Druckmittelspeicher mittels eines Speicherladeventils aufladbar. Bevorzugt ist ein Öffnungsdruck des Speicherladeventils zum Befüllen des Druckmittelspeichers auf einen Wert oberhalb des Verbraucherdruckes der Verbraucher des Speisedruckkreises und unterhalb eines Einstellwertes einer Druckbegrenzungseinrichtung, beispielsweise eines Druckbegrenzungsventils, des Speisedruckkreises eingestellt. Das Befüllen erfolgt somit in Betriebszuständen, in denen sich der Förderdruck der Speisepumpe oberhalb des Verbraucherdruckes der Verbraucher des Speisedruckkreises und unterhalb eines Einstellwertes eines Druckbegrenzungsventils des Speisedruckkreises befindet. Hierdurch kann auf einfache Weise eine Speicherladeschaltung erzielt werden.

Gemäß einer vorteilhaften Weiterbildung der Erfindung umfasst der Speisedruckkreis einen Lüfterantrieb.

Die variable Saugdrosseleinrichtung ist hierbei gemäß einer bevorzugten Weiterbildung der Erfindung entgegen dem Förderdruck mittels einer Übersteuereinrichtung in die Durchflussstellung beaufschlagbar. Mit einer derartigen Übersteuerung der von dem Drosselventil an der Einlassseite gebildeten variablen Saugdrosseleinrichtung ist es auf einfache Weise möglich, die Ansaugmenge zu variieren, um beispielsweise die Drehzahl des Lüfterantriebs zu steuern. Mit einer derartigen Übersteuerung der Saugdrosseleinrichtung kann insbesondere in Verbindung mit einem von der Speisepumpe versorgten Lüfterantrieb eine Drehzahlsteuerung eines Lüfterantriebs, der einen Konstantmotor zum Antrieb eines Lüfters umfasst, auf einfache Weise mit der erfindungsgemäßen Speisepumpe erzielt werden.

Die Übersteuereinrichtung kann hierbei von einem elektrischen oder hydraulischen Aktuator gebildet sein. Insbesondere bei einem elektrischen Aktuator, beispielsweise einem als Proportionalmagnet ausgebildeten Aktuator, kann das die variable Saugdrosseleinrichtung bildende Drosselventil auf einfache Weise in Richtung der Durchflussstellung übersteuert werden, wodurch beispielsweise die Drehzahl des Lüfterantriebs auf einfache Weise gesteuert werden kann.

Besondere Vorteile ergeben sich bei einer mobilen Arbeitsmaschine mit einem von einem Antriebsmotor, insbesondere einem Verbrennungsmotor, angetriebenen Antriebssystem nach einem der vorangegangenen Ansprüche. Durch die erfindungsgemäße sauggedrosselte, hubkonstante Kolbenpumpe als Speisepumpe für das Druckkonstantnetz des Speisekreises kann bei einer mobilen Arbeitsmaschine durch die Verringerung des erforderlichen Antriebsmoments für die erfindungsgemäße Speisepumpe eine drehmomentseitige Entlastung des Verbrennungsmotors und durch die Begrenzung der Antriebsleitung und Konstanthaltung der Leistungsaufnahme der Speisepumpe mit zunehmender Antriebsdrehzahl eine Reduzierung der Verluste zur Erzeugung des konstanten Speisedruckes im Speisedruckkreis und somit eine Verringerung des Brennstoffverbrauchs des Antriebsmotors erzielt werden.

Hinsichtlich der Anordnung der erfindungsgemäßen Speisepumpe in dem von dem Antriebsmotor angetriebenen Antriebsstrang der mobilen Arbeitsmaschine ist eine Anordnung möglich, bei der die Speisepumpe im Antriebsstrang hinter bzw. vor einer von dem Antriebsmotor angetriebenen Arbeitshydraulikpumpe einer Arbeitshydraulik angeordnet ist.

Sofern die mobile Arbeitsmaschine weiterhin eine von dem Antriebsmotor angetriebene Fahrpumpe eines hydrostatischen Fahrantriebs aufweist, kann die Speisepumpe im Antriebsstrang hinter bzw. vor der Fahrpumpe angeordnet werden.

Weitere Vorteile und Einzelheiten der Erfindung werden anhand der in den schematischen Figuren dargestellten Ausführungsbeispiele näher erläutert. Hierbei zeigt
- Figur 1: einen Schaltplan eines erfindungsgemäßen Antriebssystems,
- Figur 2: einen Ausschnitt der Figur 1 in einer vergrößerten Darstellung,
- Figur 3: einen weiteren Ausschnitt der Figur 1 in einer vergrößerten Darstellung,
- Figur 4: eine konstruktive Ausführungsform einer erfindungsgemäßen Speisepumpe in einem Längsschnitt,
- Figur 5: eine zweite konstruktive Ausführungsform einer erfindungsgemäßen Speisepumpe in einem Längsschnitt,
- Figur 6: eine Ansicht gemäß Linie A-A der Figur 5,
- Figur 7: eine Darstellung der Antriebsleistung, des Förderstroms und des Antriebsmoments einer erfindungsgemäßen Speisepumpe und
- Figur 8: eine Darstellung der Antriebsleistung, des Förderstroms und des Antriebsmoments einer Speisepumpe des Standes der Technik.

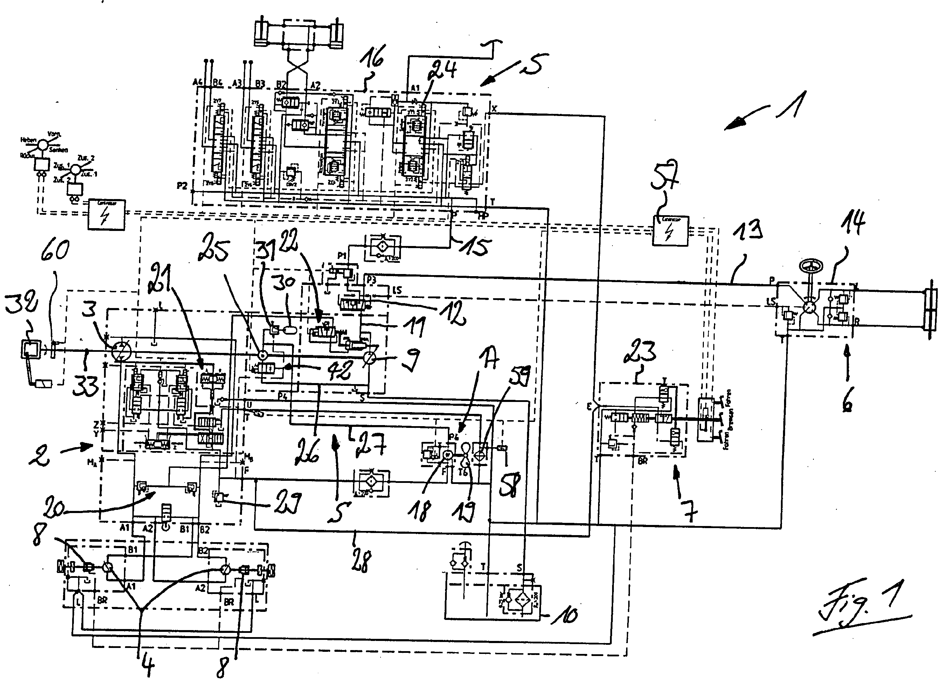

In der Figur 1 ist der Schaltplan eines hydrostatischen Antriebssystems 1 einer mobilen Arbeitsmaschine, beispielsweise eines Flurförderzeugs, dargestellt.

Das Antriebssystem 1 umfasst einen hydrostatischen Fahrantrieb 2, der von einer Fahrpumpe 3 und zumindest einem Fahrmotor 4 gebildet ist und als geschlossener Kreislauf ausgebildet ist. Das Antriebssystem 1 umfasst weiterhin eine Arbeitshydraulik 5, die mehrere Verbraucher umfasst, beispielsweise einen Hubantrieb, eine Neigeantrieb sowie einem Zusatzverbraucher, beispielsweise eine Seitenschiebereinrichtung. Das Antriebssystem 1 umfasst weiterhin eine hydraulische Lenkungseinrichtung 6. Darüber hinaus umfasst das Antriebssystem 1 eine hydraulische Bremseinrichtung 7, die von einer mit den Fahrmotoren in Wirkverbindung stehenden hydraulischen Federspeicherbremse 8 gebildet ist.

Zur Versorgung der Arbeitshydraulik 5 und der Lenkungseinrichtung 6 ist eine im offenen Kreislauf betriebene Arbeitshydraulikpumpe 9 vorgesehen, die aus einem Behälter 10 Druckmittel ansaugt und in eine Förderleitung 11 fördert, in der ein Prioritätsventil 12 zur bevorzugten Versorgung der Lenkungseinrichtung 6 angeordnet ist. Von dem Prioritätsventil 12 führt eine Förderzweigleitung 13 zu einem Eingang P eines Lenkungsventils 14 und eine Förderzweigleitung 15 zu einem Eingang P eines Steuerventilsblocks 16 der Arbeitshydraulik 5.

Das Antriebssystem 1 weist weiterhin einen Speisedruckkreis S auf, der mehrere Verbraucher umfasst. Ein Verbraucher des Speisedruckkreises S ist von einem Lüfterantrieb 17 gebildet, der von einem mittels eines hydraulischen Konstantmotors 18 angetriebenen Lüfterrad 19 gebildet ist. Ein weiterer Verbraucher des Speisedruckkreises S ist von einer Einspeiseinrichtung 20 des im geschlossenen Kreislauf ausgebildeten hydrostatischen Fahrantriebs gebildet. Ein weiterer Verbraucher des Speisedruckkreises S bildet eine Stelleinrichtung 21 zur Verstellung des Fördervolumens der als hubverstellbare Verstellpumpe mit einem verstellbaren Fördervolumen ausgebildeten Fahrpumpe 3. Im vorliegenden Ausführungsbeispiel ist die Arbeitshydraulikpumpe 9 ebenfalls als hubverstellbare Verstellpumpe mit einem verstellbaren Fördervolumen ausgebildet, wobei eine Stelleinrichtung 22 zur Verstellung des Fördervolumens der Arbeitshydraulikpumpe 9 einen weiteren Verbraucher des Speisedruckkreises S bildet. Eine Bremsventileinrichtung 23, mittels der ein Bremslüftdruck bzw. Bremsdruck der Bremseinrichtung 7 erzeugbar ist, bildet einen weiteren Verbraucher des Speisedruckkreises S. Die in dem Steuerventilblock 16 der Arbeitshydraulik 5 zur Betätigung der entsprechenden Verbraucher angeordneten Wegeventile sind im dargestellten Ausführungsbeispiel elektrohydraulisch vorsteuerbar, wobei elektrisch ansteuerbare Vorsteuerventile 24, die einen hydraulischen Ansteuerdruck zur Betätigung des entsprechenden Wegeventils erzeugen, als weitere Verbraucher des Speisedruckkreises S eingangsseitig mit dem Speisedruckkreis S als Steuerdruckquelle in Verbindung stehen. Die Fahrpumpe 3 sowie die Arbeitshydraulikpumpe 9 sind bevorzugt als Axialkolbenpumpen in Schrägscheibenbauweise mit einer im Neigungswinkel verstellbaren Schrägscheibe ausgebildet.

Zur Versorgung des Speisedruckkreises S mit einem konstanten Speisedruck ist eine Speisepumpe 25 vorgesehen, die im offenen Kreislauf betrieben ist und hierzu eingangsseitig mittels einer Ansaugleitung 26 mit dem Behälter 10 in Verbindung steht. Die Speisepumpe 25 fördert ausgangsseitig in eine Förderleitung 27, die nach der Durchströmung des Lüfterantriebs 17 an einen Anschluss F des Fahrantriebs 2 angeschlossen ist, über den die Einspeiseeinrichtung 20 sowie die Stelleinrichtung 21 der Fahrpumpe 3 sowie die Stelleinrichtung 22 der Arbeitshydraulikpumpe 9 versorgt werden. Stromauf des Anschlusses F zweigt eine Förderzweigleitung 28 von der Förderleitung 27 ab, die zur Versorgung der Bremseinrichtung 7 an einen Anschluss E des Bremsventils 23 und zur Versorgung der Vorsteuerventile 24 an einen Anschluss X des Steuerventilblocks 16 angeschlossen ist.

In der Figur 1 ist weiterhin zur Begrenzung des konstanten Speisedruckniveaus des Speisedruckkreises S eine von einem Druckbegrenzungsventil gebildete Druckbegrenzungseinrichtung 29 dargestellt, die der Förderleitung 27 bzw. der Förderzweigleitung 28 zugeordnet ist.

Der Speisedruckkreis S umfasst weiterhin einen Druckmittelspeicher 30, der mittels eines Speicherladeventils 31 mit der Förderleitung 27 der Speisepumpe 25 in Verbindung steht.

Zum Antrieb der Fahrpumpe 3, der Arbeitshydraulikpumpe 9 sowie der Speisepumpe 25 ist ein Antriebsmotor 32 vorgesehen, beispielsweise ein von einem Dieselmotor oder Treibgasmotor ausgebildeter Verbrennungsmotor, dessen Antriebswelle 33 mit den Pumpen 3, 9, 25 trieblich und drehfest verbunden ist. Im dargestellten Ausführungsbeispiel ist die Speisepumpe 25 in dem von den Antriebsmotor 32, der Antriebswelle 33 und den Pumpen 3, 9, 25 gebildeten Antriebsstrang zwischen der Fahrpumpe 3 und der Arbeitshydraulikpumpe 9 und somit hinter der Fahrpumpe 3 und vor der Arbeitshydraulikpumpe 9 angeordnet. Es ist alternativ möglich, die Speisepumpe 25 in dem Antriebsstrang hinter der Arbeitshydraulikpumpe 9 anzuordnen. Zudem kann alternativ die Speisepumpe 25 im Antriebsstrang zwischen dem Antriebsmotor 32 und der Fahrpumpe 3 und somit vor der Fahrpumpe 3 angeordnet werden.

Erfindungsgemäß ist die Speisepumpe 25 als hubkonstante und sauggedrosselte Kolbenpumpe 40 ausgebildet.

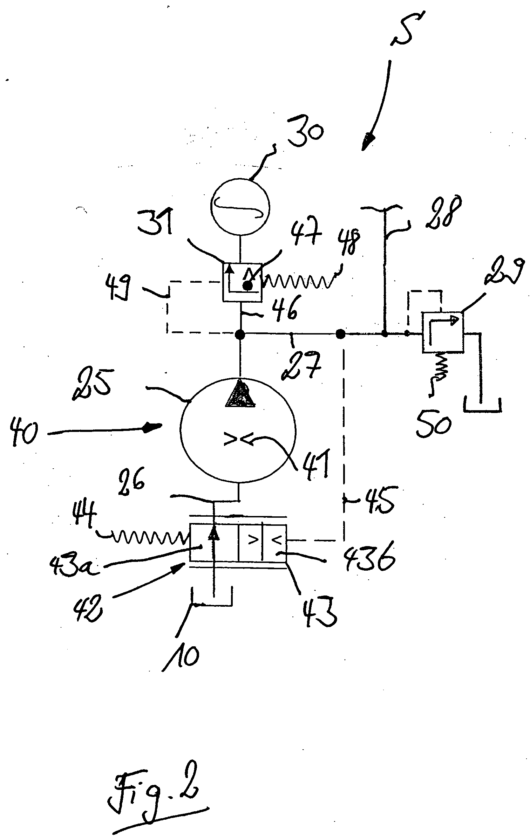

In der Figur 2 ist der Speisedruckkreis S mit der erfindungsgemäßen Speisepumpe 25 in einer vereinfachten Darstellung dargestellt. Die erfindungsgemäße hubkonstante und sauggedrosselte Kolbenpumpe 40 ist mit einer internen Volumenstrombegrenzung 41 versehen, mit der bei Erreichen und Überschreiten einer Grenzdrehzahl die Befüllung der Kolbenpumpe 40 begrenzt wird und nur noch eine Teilbefüllung der Verdrängerräume V der Kolbenpumpe 40 zugelassen wird.

Die erfindungsgemäße Kolbenpumpe 40 umfasst weiterhin eine variable Saugdrosseleinrichtung 42, die im vorliegenden Ausführungsbeispiel als bedarfsabhängige, bevorzugt förderdruckabhängige Saugdrosseleinrichtung 42 ausgebildet ist und somit eine druckabhängige variable Saugdrosselung bildet. Die Saugdrosseleinrichtung 42 ist der Einlassseite und somit der Saugseite der Kolbenpumpe 40 zugeordnet und von einem Drosselventil 43 gebildet. Die Saugdrosseleinrichtung 42 kann hierbei in der Ansaugleitung 26 der Kolbenpumpe 40 angeordnet sein. Das Drosselventil 43 ist als in Zwischenstellungen drosselndes Steuerventil mit einer Durchflussstellung 43a und einer Drosselstellung 43b ausgebildet. Das Drosselventil 43 ist mittels einer Feder 44 in Richtung der Durchflussstellung 43a und lastdruckabhängig von dem in der Förderleitung 27 bzw. 28 der Kolbenpumpe 40 anstehenden Förderdruck in Richtung der Drosselstellung 43b beaufschlagbar ist. Hierzu ist eine Steuerleitung 45 von der den Förderdruck führenden Förderleitung 27, 28 an eine entsprechende Steuerdruckfläche des Drosselventils 43 geführt.

In der Figur 2 ist weiterhin der beispielsweise von einem Membranspeicher gebildete Druckmittelspeicher 30 dargestellt, der mittels des Speicherladeventils 31 aufladbar und entladbar ist. Das Speicherladeventil 31 ist in einer von der Förderleitung 27, 28 abzweigenden Zweigleitung 46 angeordnet und weist eine Ladestellung und eine von einem in Richtung zur Förderleitung öffnenden Rückschlagventil 47 gebildete Entladestellung auf. Das Speicherladeventil 31 ist mittels einer Feder 48 in Richtung der Entladestellung und von dem in der Förderleitung 27, 28 anstehenden Förderdruck in Richtung der Ladestellung beaufschlagt. Hierzu ist eine Steuerleitung 49 an eine entsprechende Steuerdruckfläche des Speicherladeventils 31 geführt. Über das Rückschlagventil 47 kann hierbei der Speisedruckkreis S auf dem Druckmittelspeicher 30 versorgt werden, beispielsweise im Fall von Volumenstromspitzen im Speisedruckkreis S.

In der Figur 2 ist weiterhin die von dem Druckbegrenzungsventil gebildete Druckbegrenzungseinrichtung 29 dargestellt, die zur Begrenzung des Speisedruckniveaus der Förderleitung 27, 28 zugeordnet ist. Der Öffnungsdruck der Druckbegrenzungseinrichtung 29 wird von einer Feder 50 definiert.

Eine Speicherladeschaltung zum Befüllen des Druckmittelspeichers 30 wird hierbei auf einfache Weise erzielt, wenn der von der Feder 48 des Speicherladeventils 31 definierte Öffnungsdruck zum Laden des Druckmittelspeichers 30 einerseits oberhalb des Speisedruckniveaus und somit des Verbrauchernenndruckes der Verbraucher des Speisedruckkreises S liegt und andererseits geringer als der von der Feder 50 der Druckbegrenzungseinrichtung 29 definierte Öffnungsdruck und somit Absicherungsdruck des Speicherdruckkreises S ist.

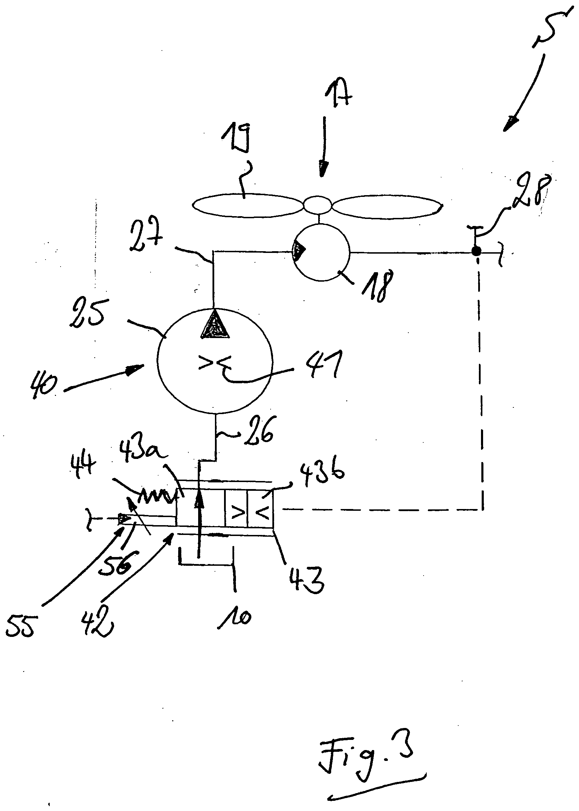

In der Figur 3 ist die erfindungsgemäße Speisepumpe 25 mit dem Lüfterantrieb 17 näher dargestellt. Die in der Ansaugleitung 26 der Kolbenpumpe 40 angeordnete bedarfsabhängige, förderdruckabhängige Saugdrosseleinrichtung 42 gemäß der Figur 3 ist mittels einer Übersteuereinrichtung 55 in Richtung der Durchflussstellung 43a beaufschlagbar und somit entgegen dem in der Steuerleitung 45 anstehenden Förderdruck in die Durchflussstellung 43a übersteuerbar.

Im dargestellten Ausführungsbeispiels ist eine elektrische Übersteuerung der variablen Saugdrosseleinrichtung 42 vorgesehen, die von einer elektrischen Betätigungseinrichtung 56, beispielsweise einem Proportionalmagneten, gebildet ist, die an der Federseite des Drosselventils 43 angeordnet ist und das Drosselventil 43 bei einer elektrischen Ansteuerung in Richtung der Durchflussstellung 43a betätigt. Die Betätigungseinrichtung 56 steht zur Ansteuerung mit einer in der Figur 1 näher dargestellten elektronischen Steuerung 57 in Verbindung, die eingangsseitig mit einem Temperatursensor 58 an einem von dem Lüfterrad 19 durchströmten Kühlereinrichtung 59 für das Druckmittel des Antriebssystems 1 in Wirkverbindung steht. Die Kühlereinrichtung 59 kann hierbei in einer zum Behälter 10 geführten Rücklaufleitung angeordnet sein. Die elektronische Steuerung 57 steht eingangsseitig mit weiteren Sensoren, beispielsweise einem Drehzahlsensor 60 des Antriebsmotors 32 in Verbindung und dient zur Drehzahleinstellung des Antriebsmotors 32. Durch entsprechende Betätigung der Betätigungseinrichtung 56 kann das Drosselventils 43 in Richtung der Durchflussstellung 43a beaufschlagt werden, um die Ansaugmenge der Speisepumpe 25 zu erhöhen, um im Bedarfsfall die Drehzahl des mit dem Konstantmotor 18 versehenen Lüfterantriebs 17 zu erhöhen und die Temperatur des die Kühlereinrichtung 59 durchströmenden Druckmittels abzusenken.

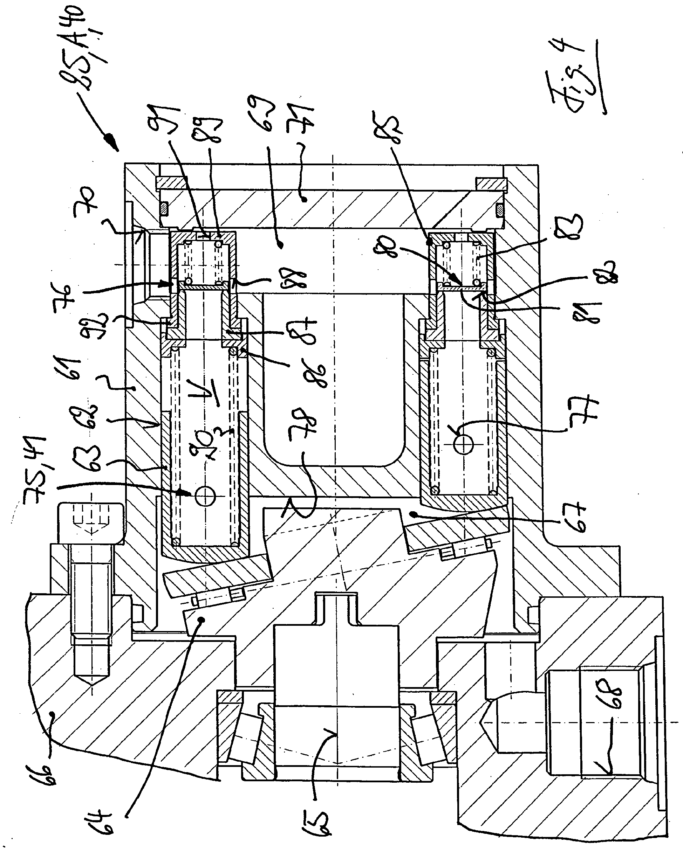

In der Figur 4 ist eine Ausführungsform einer erfindungsgemäßen Speisepumpe 25 in einem Längsschnitt dargestellt, die als Axialkolbenpumpe A in Taumelscheibenbauweise ausgebildet ist. Die Speisepumpe 25 weist einen feststehenden Zylinderblock 61 auf, der mit einer oder mehreren Zylinderbohrungen 62 versehen ist, in denen jeweils ein Kolben 63 längsverschiebbar angeordnet ist. Die Kolben 63 stützen sich mit dem aus dem Zylinderblock 61 herausragenden Bereich an einer um eine Drehachse 65 drehbar gelagerten Taumelscheibe 64 ab, die zum Antrieb mit der Antriebwelle 33 des Antriebsmotors 32 in trieblicher Verbindung steht. In der Figur 4 ist der untere Kolben 63 im oberen Totpunkt des Förderhubs und der obere Kolben 63 im unteren Totpunkt des Saughubes dargestellt. Aufgrund der feststehenden Neigung der Taumelscheibe 64 weisen die Kolben 63 einen konstanten Hub auf.

Der Zylinderblock 61 ist an einem Gehäuse 66 befestigt, wobei ein mit der Taumelscheibe 64 versehener Gehäuseinnenraum 67, der von dem Zylinderblock 61 und dem Gehäuse 66 begrenzt wird, die saugseitige Einlassseite der Speisepumpe 25 bildet, die über einen Anschluss 68 mit der Ansaugleitung 26 in Verbindung steht. In der Figur 4 nicht näher dargestellt ist die der Einlassseite zugeordnete und in der Ansaugleitung 26 angeordnete variable Saugdrosseleinrichtung 42. Die förderseitige Auslassseite ist von einem Auslassraum 69 des Zylinderblocks 61 gebildet, in den die Zylinderbohrungen 62 münden. Der Auslassraum 69 steht mit einem Anschluss 70 für die Förderleitung 27 in Verbindung und ist mittels eines Deckels 71 dichtend verschließbar, der in dem Zylinderblock 61 dichtend befestigt ist.

Die Kolbenpumpe 40 ist mit einer kombinierten Steuerung für die Einlassseite und die Auslassseite versehen, wobei die Einlassseite mit einer Kolbensteuerung 75 und die Auslassseite mit einer Ventilsteuerung 76 versehen ist.

Die Kolbensteuerung 75, die gleichzeitig die interne Volumenstrombegrenzung 41 bildet, ist von einer oder mehreren quer zur Kolbenlängsachse in dem Kolben 63 ausgebildeten Ausnehmung 77 gebildet, die während des Kolbenhubs mit der Stirnseite 78 des Zylinderblocks 61 im Bereich des einlassseitigen Gehäuseinnenraums 67 zusammenwirkt. Im vorliegenden Ausführungsbeispiel ist die Ausnehmung 77 von einer Querbohrung im Kolben 63 gebildet. Die Ausnehmung 77 ermöglicht somit eine Kolbensteuerung, mit der im Saughub Druckmittel von dem Gehäuseinnenraum 67 in den von dem Kolben 61 und der Zylinderbohrung 62 definierten Verdrängerraum V einströmen kann. Mit zunehmender Antriebsdrehzahl der Taumelscheibe 64 ergibt sich im Saughub des entsprechenden Kolbens 63 ein zeitlich abnehmendes Zeitfenster, in dem Druckmittel über die von der Ausnehmung 77 gebildete Kolbensteuerung 75 von dem Gehäuseinnenraum 67 und somit der Einlassseite in den Verdrängerraum V einströmen kann, wodurch die Ansaugmenge des Kolbens 63 im Saughub reduziert wird. Erreicht die Antriebsdrehzahl der Taumelscheibe 64 eine Grenzdrehzahl, wird durch die Kolbensteuerung 75 eine interne Volumenstrombegrenzung 41 erzielt, in der nur noch eine Teilbefüllung der Verdrängerräume V im Saughub zugelassen wird, so dass der lieferbare Förderstrom auf einen Maximalwert begrenzt wird. Oberhalb der Grenzdrehzahl ergibt sich ein auf den begrenzten Wert konstanter Förderstrom, da der Effekt einer sich mit abnehmendem Zeitfenster der Kolbensteuerung 75 verringernden Ansaugmenge durch die zunehmende Antriebsdrehzahl kompensiert wird.

Wird hierbei die variable Saugdrosseleinrichtung 42 in der Einlassseite ausgehend von der Durchflussstellung 43a in Richtung der Drosselstellung 43b beaufschlagt, kann der von der internen Volumenstrombegrenzung 41 bei in der Durchflussstellung 43a befindlicher Saugdrosseleinrichtung 42 auf den Maximalwert begrenzte und konstante Förderstrom stufenlos verringert und reduziert werden.

Die Ventilsteuerung 76 der Auslassseite umfasst ein federbelastetes Auslassventil 80, das als Rückschlagventil ausgebildet ist und in Richtung vom Verdrängerraum V zum Auslassraum 69 öffnet. Das Auslassventil 80 ist im dargestellten Ausführungsbeispiel von einer Platte 81 gebildet, die einen Ventilsitz 82 ansteuert und mittels einer Feder 83 in eine Sperrstellung beaufschlagt ist.

Das als Rückschlagventil ausgebildete Auslassventil 80 ist in einer an der Zylinderbohrung 62 angeordneten Hülse 85 angeordnet und integriert. Die Hülse 85 umfasst einen Federteller 86, an dem eine Feder 90 anliegt, die mit dem anderen Ende am Kolben 63 abgestützt, um den Kolben 63 im Saughub in Anlage an die Taumelscheibe 64 zu beaufschlagen. In der Hülse 85 ist das Auslassventil 80 integriert, wobei der Ventilsitz 82 an einem bohrungszapfenförmigen Zwischenbauteil 87 ausgebildet ist, das in einer Längsbohrung der Hülse 85 angeordnet ist. An der Hülse 85 ist im Bereich des Ventilsitzes 82 eine Querverbindung 88 ausgebildet, um bei geöffnetem Auslassventil 80 den Verdrängerraum V mit dem Auslassraum 69 zu verbinden. Die Hülse 85 definiert mit einer in der Figur 4 rechten Stirnwand 89 einen Federraum, in dem die Feder 83 des Auslassventils 80 angeordnet ist.
Über eine Verbindungsbohrung 91 in der Stirnwand 89 steht der Federraum des Auslassventils 80 mit dem Auslassraum 69 in Verbindung.

In der Figur 4 befindet sich die Hülse 85 an einem Anschlag, wobei die Hülse 85 mit einem bundförmigen Anschlag 92 an einem Bohrungsabsatz der Zylinderbohrung 62 anliegt. Die Hülsen 85 sind hierbei unverschiebbar in der entsprechenden Zylinderbohrung 62 angeordnet und werden kraftschlüssig über den Federteller 86 von der Feder 90 mit dem Anschlag 92 an dem Bohrungsabsatz der Zylinderbohrung 62 gehalten und somit von der Feder 90 kraftschlüssig in axialer Richtung fixiert.

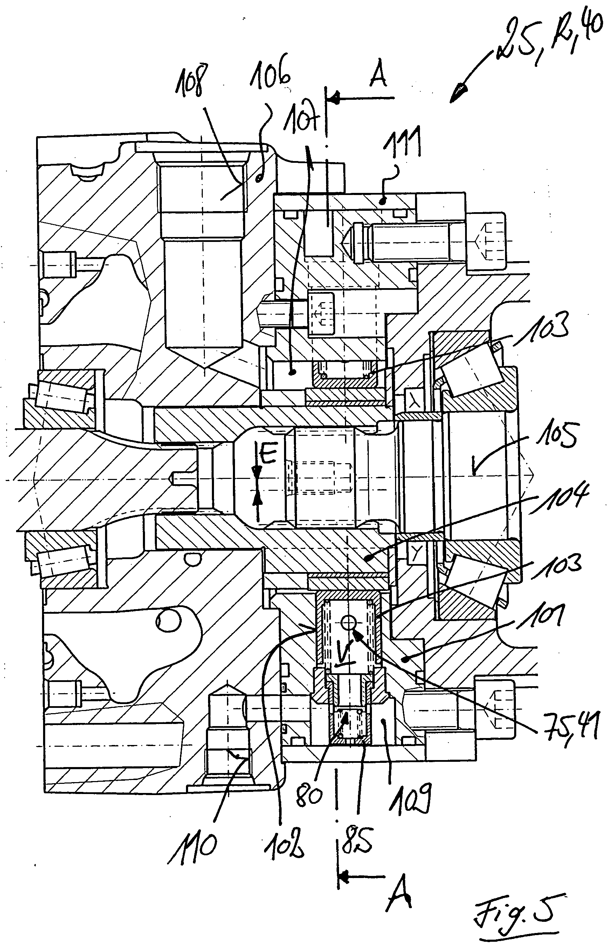

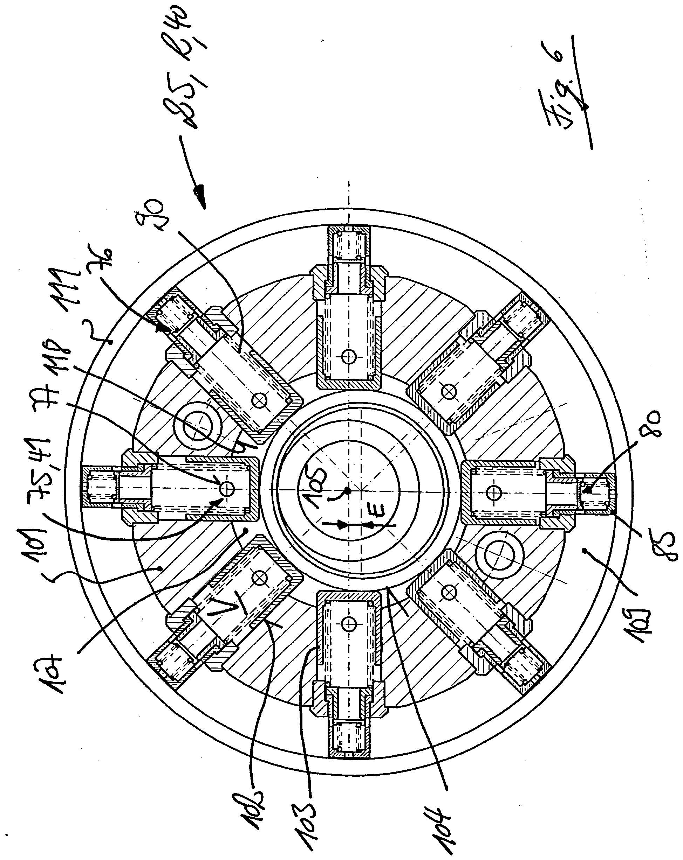

In den Figuren 5 und 6 ist eine Ausführungsform einer erfindungsgemäßen Speisepumpe 25 in einem Längsschnitt und in einer Draufsicht dargestellt, die als Radialkolbenpumpe R ausgebildet ist.

Die Speisepumpe 25 weist einen feststehenden Zylinderblock 101 auf, der mit Zylinderbohrungen 102 versehen ist, in denen jeweils ein Kolben 103 längsverschiebbar angeordnet ist. Die Kolben 103 sind radial innen abgestützt und stützen sich mit dem aus dem Zylinderblock 101 radial nach innen herausragenden Bereich an einer um eine Drehachse 105 drehbar gelagerten Exzenterscheibe 104 ab, die zum Antrieb mit der Antriebwelle 33 des Antriebsmotors 32 in trieblicher Verbindung steht. In der Figur 5 bzw. der Figur 6 befindet sich der untere Kolben 103 im oberen Totpunkt des Förderhubs und der obere Kolben 103 im unteren Totpunkt des Saughubes dargestellt. Aufgrund der festen Exzentrizität E der Exzenterscheibe 104 weisen die Kolben 103 einen konstanten Hub auf.

Der Zylinderblock 101 ist an einem Gehäuse 106 befestigt, wobei der mit der Exzenterscheibe 104 versehene radial innere Gehäuseinnenraum 107 die Einlassseite der Speisepumpe 25 bildet, die über einen Anschluss 108 mit der Ansaugleitung 26 in Verbindung steht. Die Auslassseite ist von einem radial außen angeordneten Auslassraum 109 des Zylinderblocks 101 gebildet, in den die Zylinderbohrungen 102 münden. Der Auslassraum 109 steht mit einem Anschluss 110 für die Förderleitung 26 in Verbindung und ist von einem rohrförmigen Deckel 111 dichtend verschließbar, der am dem Zylinderblock 101 dichtend befestigt ist. In den Figuren 5 und 6 nicht näher dargestellt ist die der Einlassseite zugeordnete und in der Ansaugleitung 26 angeordnete variable Saugdrosseleinrichtung 42.

Die als Radialkolbenpumpe R ausgebildete Speisepumpe 25 ist identisch mit der Axialkolbenmaschine A der Figur 4 mit einer kombinierten Steuerung für die Einlassseite und die Auslassseite versehen, wobei die Einlassseite mit einer mit der Figur 4 identischen Kolbensteuerung 75 mittels der Ausnehmungen 77 in den Kolben 103, die die radial innere Stirnseite 118 des Zylinderblocks 101 im Saughub ansteuern, und die interne Volumenstrombegrenzung 41 bilden. Die Auslassseite ist mit einer mit der Figur 4 identischen Ventilsteuerung 76 mit dem Auslassventil 80 versehen, die in den entsprechenden Hülsen 85 integriert und angeordnet sind.

Bei einer erfindungsgemäßen Kolbenpumpe kann eine interne Volumenstrombegrenzung 41 und zusätzlich eine bedarfsabhängigen, insbesondere einer förderdruckabhängigen, Saugdrosseleinrichtung 42 vorgesehen werden, die von dem der Einlassseite zugeordneten und bevorzugt in der Ansaugleitung 26 angeordnete Drosselventil 43 gebildet ist.

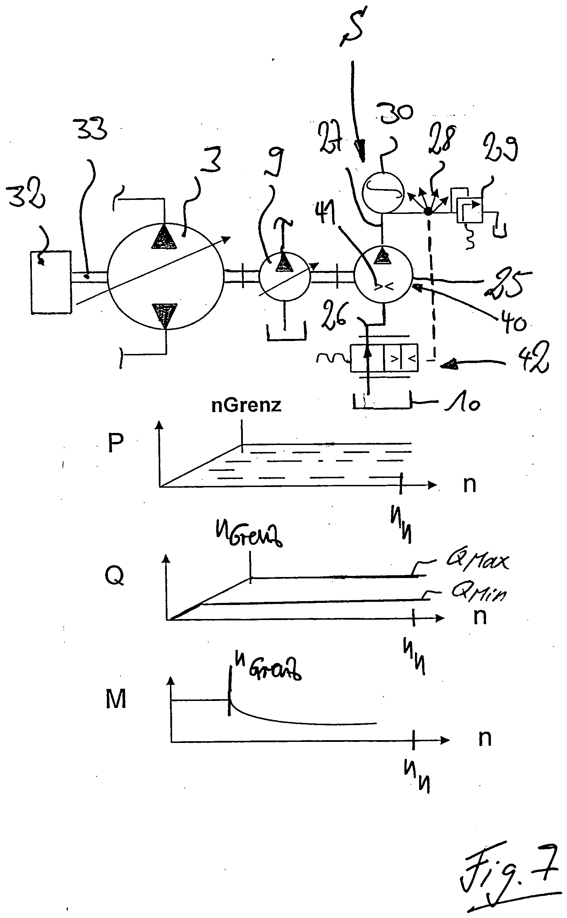

In der Figur 7 sind für die erfindungsgemäße, als sauggedrosselte und hubkonstante Kolbenpumpe 40 ausgebildete Speisepumpe 25 in den Diagrammen die erforderliche Antriebsleistung und somit die Leistungsaufnahme P, der Förderstrom Q sowie das erforderlich Antriebsmoment M über die Antriebsdrehzahl n schematisch aufgetragen.

Durch die interne Volumenstrombegrenzung 41, die von der Kolbensteuerung 75 an der Einlassseite mit einem festen Widerstand gebildet ist, wird erzielt, dass ab einer Grenzdrehzahl n_{Grenz} die Verdrängerräume V im Saughub nur noch teilbefüllt werden, so dass die Ansaugmenge begrenzt wird und die Leistungsaufnahme P begrenzt ist. Die Kolbenpumpe 40 liefert oberhalb der Grenzdrehzahl n_{Grenz} mit zunehmender Drehzahl n einen konstanten Förderstrom Q. Mit der variablen, förderdruckabhängigen Saugdrosseleinrichtung 42 mit einer variablen Drosselung, die von dem Drosselventil 43 gebildet ist, kann eine weitere, bedarfsabhängige Verringerung der Ansaugmenge im Saughub erzielt werden, so dass der von der erfindungsgemäßen Speisepumpe 25 gelieferte Förderstrom Q stufenlos verringert werden kann. In der Figur 7 sind in dem mittleren Diagramm ein maximaler Förderstrom Q_{Max} dargestellt, den die Kolbenpumpe 40 mit der internen Volumenstrombegrenzung 41 bei in der Durchflussstellung 43a befindlichem Drosselventil 43 liefert. In dem Diagramm ist weiterhin eine minimaler Förderstrom Q_{Min} dargestellt, der sich bei der Kolbenpumpe 40 mit der internen Volumenstrombegrenzung 41 bei in der Drosselstellung 43b befindlichem Drosselventil 43 einstellt. Durch die variable Saugdrosseleinrichtung 42 kann somit der von der internen Volumenstrombegrenzung 41 oberhalb der Grenzdrehzahl auf einen konstanten Wert begrenzte Förderstrom Q stufenlos reduziert und zwischen den Werten Q_{Max} und Q_{Min} stufenlos eingestellt werden. Bis zum Erreichen der Grenzdrehzahl n_{Grenz} ist aufgrund der konstanten Ansaugmenge pro Saughub ein konstantes Antriebsmoment M für die erfindungsgemäße Speisepumpe 25 erforderlich. Oberhalb der Grenzdrehzahl n_{Grenz} wird bei der erfindungsgemäßen sauggedrosselten Kolbenpumpe 40 eine Reduzierung des erforderlichen Antriebsmoment M und somit eine drehmomentseitige Entlastung des Antriebsmotors 32 erzielt.

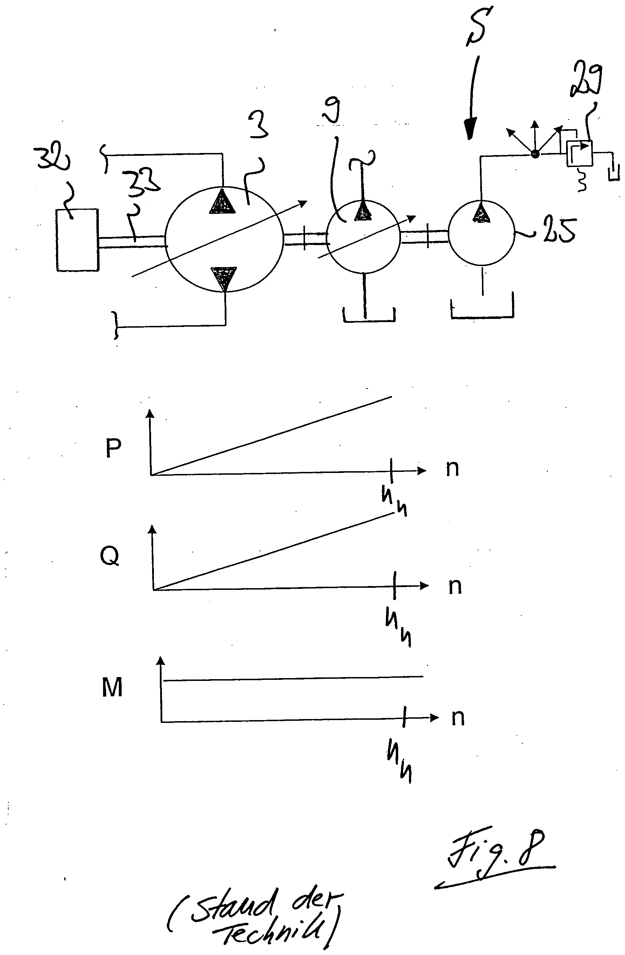

In der Figur 8 sind für eine Speisepumpe des Standes der Technik, beispielsweise eine Zahnradpumpe mit einem konstanten Schluckvolumen, in den Diagrammen die Leistungsaufnahme P, der Förderstrom Q sowie das erforderlich Antriebsmoment M über die Drehzahl n schematisch aufgetragen.

Durch das konstante Schluckvolumen der Speisepumpe 25 des Standes der Technik und somit der konstanten Ansaugmenge pro Saughub ist über die Drehzahl n ein konstantes Antriebsdrehmoment M zum Antrieb der Speisepumpe 25 erforderlich. Durch das konstante Schluckvolumen der Speisepumpe 25 des Standes der Technik steigt der erzeugte Förderstrom Q proportional mit der Drehzahl n des Antriebsmotors 32 an. Durch den proportional ansteigenden Förderstrom Q steigt ebenfalls die erforderliche Antriebsleitung P für die Speisepumpe 25 des Standes der Technik mit der Drehzahl n proportional an.

Mit der erfindungsgemäßen sauggedrosselten Speisepumpe 25, deren Fördermenge bedarfsabhängig an den Bedarf der Verbraucher des Speisedruckkreises eingestellt werden kann, kann gegenüber einer Speisepumpe 25 des Standes der Technik bei einer Nenndrehzahl nₙ des Antriebsmotors 32 die Leistungsaufnahme P und der dadurch hervorgerufene Verlust des Antriebsmotors 32 zur Versorgung des als Konstantdrucknetz ausgebildeten Speisedruckkreis S deutlich gesenkt werden.

## Patentansprüche

1. Hydrostatisches Antriebssystem (1) mit einem Antriebsmotor (32), mit einer von dem Antriebsmotor (32) angetriebenen Arbeitshydraulikpumpe (9) einer Arbeitshydraulik (5) und/oder mit einer von dem Antriebsmotor (32) angetriebenen Fahrpumpe (3) eines hydrostatischen Fahrantriebs (2) und mit einer von dem Antriebsmotor (32) angetriebenen Speisepumpe (25), die einen als Konstantdrucknetz mit einem aufgeprägten Druck ausgebildeten Speisedruckkreis (S) des Antriebssystems versorgt, wobei die Speisepumpe im offenen Kreislauf betrieben ist und aus einem Behälter (10) Druckmittel ansaugt und in eine Förderleitung (27) fördert, **dadurch gekennzeichnet, dass** die Speisepumpe (25) als hubkonstante und sauggedrosselte Kolbenpumpe (40) ausgebildet ist.

2. Hydrostatisches Antriebssystem nach Anspruch 1, **dadurch gekennzeichnet, dass** die Kolbenpumpe (40) zur Veränderung des Förderstroms mit einer internen Volumenstrombegrenzung (41) und/oder einer variablen Saugdrosseleinrichtung (42) versehen ist.

3. Hydrostatisches Antriebssystem nach Anspruch 2, **dadurch gekennzeichnet, dass** die variable Saugdrosseleinrichtung (42) als bedarfsabhängige, insbesondere förderdruckabhängige, Saugdrosseleinrichtung ausgebildet ist.

4. Hydrostatisches Antriebssystem nach Anspruch 2 oder 3, **dadurch gekennzeichnet, dass** die Kolbenpumpe (40) mindestens einen in einer Zylinderbohrung (62; 102) längsverschiebbare Kolben (63; 103) aufweist, wobei die interne Volumenstrombegrenzung (41) von einer Kolbensteuerung (75) an einer Einlassseite gebildet ist.

5. Hydrostatisches Antriebssystem nach Anspruch 4, **dadurch gekennzeichnet, dass** der Kolben (63; 103) mit mindestens einer Ausnehmung (77) versehen ist, mittels der im Saughub der Verdrängerraum (V) mit der Einlassseite verbindbar ist.

6. Hydrostatisches Antriebssystem nach Anspruch 5, **dadurch gekennzeichnet, dass** die Einlassseite von einem Gehäuseinnenraum (67; 107) der Kolbenpumpe (40) gebildet ist und die Ausnehmung (77) als Querbohrung im Kolben (62; 102) ausgebildet ist, die im Saughub mit dem Gehäuseinnenraum (67; 107) in Verbindung steht.

7. Hydrostatisches Antriebssystem nach einem der Ansprüche 2 bis 4, **dadurch gekennzeichnet, dass** die variable Saugdrosseleinrichtung (42) ein in einer Ansaugleitung (26) angeordnetes Drosselventil (43) umfasst, das als in Zwischenstellungen drosselndes Steuerventil mit einer Durchflussstellung (43a) und einer Drosselstellung (43b) ausgebildet ist.

8. Hydrostatisches Antriebssystem nach Anspruch 7, **dadurch gekennzeichnet, dass** das Drosselventil (43) mittels einer Feder (44) in Richtung der Durchflussstellung (43a) und in Abhängigkeit von dem an der Auslassseite anstehenden Förderdruck in Richtung der Drosselstellung (43b) betätigbar ist.

9. Hydrostatisches Antriebssystem nach Anspruch 8, **dadurch gekennzeichnet, dass** die Saugdrosseleinrichtung (42) entgegen dem Förderdruck mittels einer Übersteuereinrichtung (55) in Richtung der Durchflussstellung (43a) beaufschlagbar ist.

10. Hydrostatisches Antriebssystem nach Anspruch 9, **dadurch gekennzeichnet, dass** die Übersteuereinrichtung (55) von einem elektrischen oder hydraulischen Aktuator gebildet ist.

11. Hydrostatisches Antriebssystem nach einem der Ansprüche 1 bis 10, **dadurch gekennzeichnet, dass** die Kolbenpumpe (40) mit einer Ventilsteuerung (76) an einer Auslassseite versehen ist.

12. Hydrostatisches Antriebssystem nach Anspruch 11, **dadurch gekennzeichnet, dass** jedem Verdrängerraum (V) eine Hülse (85) zugeordnet ist und ein Auslassventil (80), insbesondere ein Rückschlagventil, der Ventilsteuerung (76) in der Hülse (85) angeordnet ist.

13. Hydrostatisches Antriebssystem nach einem der Ansprüche 1 bis 12, **dadurch gekennzeichnet, dass** die Kolbenpumpe (40) als Axialkolbenpumpe (A) ausgebildet ist.

14. Hydrostatisches Antriebssystem nach Anspruch 13, **dadurch gekennzeichnet, dass** die Axialkolbenpumpe (A) in Taumelscheibenbauweise mit einem feststehenden Zylinderblock (61) und einer angetriebenen Taumelscheibe (64) ausgebildet ist, an der mindestens ein Kolben (63) abgestützt ist, wobei ein Gehäuseinnenraum (67) im Bereich der Taumelscheibe (64) die Einlassseite bildet.

15. Hydrostatisches Antriebssystem nach einem der Ansprüche 1 bis 12, **dadurch gekennzeichnet, dass** die Kolbenpumpe (40) als Radialkolbenpumpe (R) ausgebildet ist.

16. Hydrostatisches Antriebssystem nach Anspruch 15, **dadurch gekennzeichnet, dass** die Radialkolbenpumpe (R) einen feststehenden Zylinderblock (101) und eine angetriebene Exzenterscheibe (104) aufweist, an der mindestens ein Kolben (103) abgestützt ist, wobei ein Gehäuseinnenraum (107) im Bereich der Exzenterscheibe (104) die Einlassseite bildet.

17. Hydrostatisches Antriebssystem nach einem der Ansprüche 1 bis 16, **dadurch gekennzeichnet, dass** der Speisedruckkreis (S) einen Druckmittelspeicher (30) umfasst.

18. Hydrostatisches Antriebssystem nach Anspruch 17, **dadurch gekennzeichnet, dass** der Druckmittelspeicher (30) mittels eines Speicherladeventils (31) aufladbar ist.

19. Hydrostatisches Antriebssystem nach einem der Ansprüche 1 bis 18, **dadurch gekennzeichnet, dass** der Speisedruckkreis (S) einen Lüfterantrieb (17) umfasst.

20. Mobile Arbeitsmaschine mit einem von einem Antriebsmotor (32), insbesondere einem Verbrennungsmotor, angetriebenen Antriebssystem (1) nach einem der vorangegangenen Ansprüche.

21. Mobile Arbeitsmaschine nach Anspruch 20, **dadurch gekennzeichnet, dass** das Antriebssystem weiterhin eine von dem Antriebsmotor (32) angetriebene Arbeitshydraulikpumpe (9) einer Arbeitshydraulik umfasst, wobei die Speisepumpe (25) im Antriebsstrang hinter der Arbeitshydraulikpumpe (9) angeordnet ist.

22. Mobile Arbeitsmaschine nach Anspruch 20, **dadurch gekennzeichnet, dass** das Antriebssystem weiterhin eine von dem Antriebsmotor (32) angetriebene Arbeitshydraulikpumpe (9) einer Arbeitshydraulik umfasst, wobei die Speisepumpe (25) im Antriebsstrang vor der Arbeitshydraulikpumpe (9) angeordnet ist.

23. Mobile Arbeitsmaschine nach einem der Ansprüche 20 bis 22, **dadurch gekennzeichnet, dass** das Antriebssystem weiterhin eine von dem Antriebsmotor (32) angetriebene Fahrpumpe (3) eines hydrostatischen Fahrantriebs umfasst, wobei die Speisepumpe (25) im Antriebsstrang hinter der Fahrpumpe (3) angeordnet ist.

24. Mobile Arbeitsmaschine nach einem der Ansprüche 20 bis 22, **dadurch gekennzeichnet, dass** das Antriebssystem weiterhin eine von dem Antriebsmotor (32) angetriebene Fahrpumpe (3) eines hydrostatischen Fahrantriebs umfasst, wobei die Speisepumpe (25) im Antriebsstrang vor der Fahrpumpe (3) angeordnet ist.

## Claims

1. Hydrostatic drive system (1) having a drive motor (32), having a working hydraulics pump (9), driven by the drive motor (32), of a working hydraulics arrangement (5), and/or having a traction pump (3), driven by the drive motor (32), of a hydrostatic traction drive (2), and having a feed pump (25) which is driven by the drive motor (32), which feed pump provides a supply to a feed pressure circuit (S), in the form of a constant-pressure network with an imposed pressure, of the drive system, wherein the feed pump is operated in an open circuit and draws pressure medium out of a container (10) and delivers said pressure medium into a delivery line (27), **characterized in that** the feed pump (25) is in the form of a constant-stroke piston pump (40) with suction throttling.

2. Hydrostatic drive system according to Claim 1, **characterized in that** the piston pump (40) is, for the variation of the delivery flow, equipped with an internal volume flow limiting means (41) and/or a variable suction throttle device (42).

3. Hydrostatic drive system according to Claim 2, **characterized in that** the variable suction throttle device (42) is in the form of a demand-dependent, in particular delivery-pressure-dependent, suction throttle device.

4. Hydrostatic drive system according to Claim 2 or 3, **characterized in that** the piston pump (40) has at least one piston (63; 103) which is longitudinally displaceable in a cylinder bore (62; 102), wherein the internal volume flow limiting means (41) is formed by a piston controller (75) at an inlet side.

5. Hydrostatic drive system according to Claim 4, **characterized in that** the piston (63; 103) is equipped with at least one recess (77) by way of which the displacement chamber (V) is connectable to the inlet side in the suction stroke.

6. Hydrostatic drive system according to Claim 5, **characterized in that** the inlet side is formed by a housing interior space (67; 107) of the piston pump (40) and the recess (77) is in the form of a transverse bore in the piston (62; 102), which transverse bore is connected, in the suction stroke, to the housing interior space (67; 107).

7. Hydrostatic drive system according to one of Claims 2 to 4, **characterized in that** the variable suction throttle device (42) comprises a throttle valve (43) which is arranged in an intake line (26) and which is in the form of a control valve which exhibits a throttling action in intermediate positions and has a throughflow position (43a) and a throttling position (43b).

8. Hydrostatic drive system according to Claim 7, **characterized in that** the throttle valve (43) is actuable in the direction of the throughflow position (43a) by way of a spring (44) and in the direction of the throttle position (43b) in a manner dependent on the delivery pressure prevailing at the outlet side.

9. Hydrostatic drive system according to Claim 8, **characterized in that** the suction throttle device (42) can be acted on in the direction of the throughflow position (43a) counter to the delivery pressure by way of an override device (55).

10. Hydrostatic drive system according to Claim 9, **characterized in that** the override device (55) is formed by an electric or hydraulic actuator.

11. Hydrostatic drive system according to one of Claims 1 to 10, **characterized in that** the piston pump (40) is equipped with a valve controller (76) at an outlet side.

12. Hydrostatic drive system according to Claim 11, **characterized in that** each displacement chamber (V) is assigned a sleeve (85), and an outlet valve (80), in particular a check valve, of the valve controller (76) is arranged in the sleeve (85).

13. Hydrostatic drive system according to one of Claims 1 to 12, **characterized in that** the piston pump (40) is in the form of an axial piston pump (A).

14. Hydrostatic drive system according to Claim 13, **characterized in that** the axial piston pump (A) is of swashplate type of construction with a static cylinder block (61) and with a driven swashplate (64) on which at least one piston (63) is supported, wherein a housing interior space (67) in the region of the swashplate (64) forms the inlet side.

15. Hydrostatic drive system according to one of Claims 1 to 12, **characterized in that** the piston pump (40) is in the form of a radial piston pump (R).

16. Hydrostatic drive system according to Claim 15, **characterized in that** the radial piston pump (R) has a static cylinder block (101) and a driven eccentric disc (104) on which at least one piston (103) is supported, wherein a housing interior space (107) in the region of the eccentric disc (104) forms the inlet side.

17. Hydrostatic drive system according to one of Claims 1 to 16, **characterized in that** the feed pressure circuit (S) comprises a pressure medium accumulator (30).

18. Hydrostatic drive system according to Claim 17, **characterized in that** the pressure medium accumulator (30) can be charged by way of an accumulator charging valve (31).

19. Hydrostatic drive system according to one of Claims 1 to 18, **characterized in that** the feed pressure circuit (S) comprises a fan drive (17).

20. Mobile working machine having a drive system (1) according to one of the preceding claims which is driven by a drive motor (32), in particular by an internal combustion engine.

21. Mobile working machine according to Claim 20, **characterized in that** the drive system furthermore comprises a working hydraulics pump (9), driven by the drive motor (32), of a working hydraulics arrangement, wherein the feed pump (25) is arranged downstream of the working hydraulics pump (9) in the drivetrain.

22. Mobile working machine according to Claim 20, **characterized in that** the drive system furthermore comprises a working hydraulics pump (9), driven by the drive motor (32), of a working hydraulics arrangement, wherein the feed pump (25) is arranged upstream of the working hydraulics pump (9) in the drivetrain.

23. Mobile working machine according to one of Claims 20 to 22, **characterized in that** the drive system furthermore comprises a traction pump (3), driven by the drive motor (32), of a hydrostatic traction drive, wherein the feed pump (25) is arranged downstream of the traction pump (3) in the drivetrain.

24. Mobile working machine according to one of Claims 20 to 22, **characterized in that** the drive system furthermore comprises a traction pump (3), driven by the drive motor (32), of a hydrostatic traction drive, wherein the feed pump (25) is arranged upstream of the traction pump (3) in the drivetrain.

## Revendications

1. Système d'entraînement hydrostatique (1) doté d'un moteur d'entraînement (32) présentant
une pompe hydraulique de travail (9), entraînée par le moteur d'entraînement (32), d'une hydraulique (5) et/ou
une pompe de déplacement (3), entraînée par le moteur d'entraînement (32), d'un entraînement hydrostatique de déplacement (2) et
une pompe d'alimentation (25), entraînée par le moteur d'entraînement (32), qui alimente un circuit d'alimentation (S) sous pression du système d'entraînement configuré comme réseau à pression élevée constante,
la pompe d'alimentation fonctionnant en boucle ouverte, aspirant dans un récipient (10) du fluide à comprimer et le délivrant dans un conduit de transport (27),
**caractérisé en ce que**
la pompe d'alimentation (25) est configurée comme pompe (40) à pistons à course constante et aspiration étranglée.

2. Système d'entraînement hydrostatique selon la revendication 1, **caractérisé en ce que** pour modifier son débit de refoulement, la pompe (40) à piston est dotée d'une limitation interne (41) de l'écoulement volumique et/ou d'un dispositif variable (42) d'étranglement de l'aspiration.

3. Système d'entraînement hydrostatique selon la revendication 2, **caractérisé en ce que** le dispositif (42) d'étranglement variable de l'aspiration est configuré comme dispositif d'étranglement de l'aspiration dépendant des besoins et en particulier dépendant de la pression de refoulement.

4. Système d'entraînement hydrostatique selon les revendications 2 ou 3, **caractérisé en ce que** la pompe (40) à piston présente au moins un piston (63; 103) apte à coulisser longitudinalement dans un alésage cylindrique (62; 102), la limitation interne (41) du débit volumique étant formée par une commande (75) du piston sur le côté de l'admission.

5. Système d'entraînement hydrostatique selon la revendication 4, **caractérisé en ce que** les pistons (63; 103) sont dotés d'au moins une découpe (77) au moyen de laquelle l'espace de refoulement (V) peut être raccordé au côté d'admission dans la course d'aspiration.

6. Système d'entraînement hydrostatique selon la revendication 5, **caractérisé en ce que** le côté d'admission est formé par l'espace intérieur (67; 107) du boîtier de la pompe (40) à piston et **en ce que** la découpe (77) est configurée comme alésage transversal ménagé dans le piston (62; 102) et qui communique avec l'espace intérieur (67; 107) du boîtier dans la course d'aspiration.

7. Système d'entraînement hydrostatique selon l'une des revendications 2 à 4, **caractérisé en ce que** le dispositif (42) d'étranglement variable de l'aspiration comporte une soupape d'étranglement (43) disposée dans un conduit d'aspiration (26) et configurée comme soupape asservie qui étrangle dans des positions intermédiaires et qui présente une position (43a) de passage complet et une position (43b) d'étranglement.

8. Système d'entraînement hydrostatique selon la revendication 7, **caractérisé en ce que** la soupape d'étranglement (43) peut être sollicitée dans la direction de la position de passage complet (43a) au moyen d'un ressort (44) et en direction de la position d'étranglement (43b) en fonction de la pression de refoulement qui s'établit du côté de la sortie.

9. Système d'entraînement hydrostatique selon la revendication 8, **caractérisé en ce qu'**un dispositif (55) de commande prioritaire permet de solliciter le dispositif (42) d'étranglement de l'aspiration en direction de la position (43a) de passage complet en opposition à la pression de refoulement.

10. Système d'entraînement hydrostatique selon la revendication 9, **caractérisé en ce que** le dispositif (55) de commande prioritaire est formé par un actionneur électrique ou hydraulique.

11. Système d'entraînement hydrostatique selon l'une des revendications 1 à 10, **caractérisé en ce que** la pompe (40) à piston est dotée d'une commande de soupape (76) sur le côté de refoulement.

12. Système d'entraînement hydrostatique selon la revendication 11, **caractérisé en ce qu'**une douille (85) est associée à chaque espace de refoulement (V) et **en ce qu'**une soupape de sortie (80), en particulier une soupape anti-retour, de la commande de soupape (76) est disposée dans la douille (85).

13. Système d'entraînement hydrostatique selon l'une des revendications 1 à 12, **caractérisé en ce que** la pompe (40) à piston est configurée comme pompe (A) à piston axial.

14. Système d'entraînement hydrostatique selon la revendication 13, **caractérisé en ce que** la pompe (A) à piston axial est configurée comme pompe à plateau oscillant présentant un bloc fixe de cylindre (61) et un plateau oscillant (64) entraîné sur lequel s'appuie au moins un piston (63), l'espace intérieur (67) du boîtier formant le côté d'admission au niveau du plateau oscillant (64).

15. Système d'entraînement hydrostatique selon l'une des revendications 1 à 12, **caractérisé en ce que** la pompe (40) à piston est configurée comme pompe (R) à piston radial.

16. Système d'entraînement hydrostatique selon la revendication 15, **caractérisé en ce que** la pompe (R) à piston radial présente un bloc fixe de cylindre (101) et un disque excentré (104) entraîné sur lequel s'appuie au moins un piston (103), l'espace intérieur (107) du boîtier formant le côté d'admission au niveau du disque excentré (104).

17. Système d'entraînement hydrostatique selon l'une des revendications 1 à 16, **caractérisé en ce que** le circuit d'alimentation (S) sous pression comporte un réservoir (30) de fluide sous pression.

18. Système d'entraînement hydrostatique selon la revendication 17, **caractérisé en ce que** le réservoir (30) de fluide sous pression peut être chargé au moyen d'une soupape (31) de chargement de réservoir.

19. Système d'entraînement hydrostatique selon l'une des revendications 1 à 18, **caractérisé en ce que** le circuit d'alimentation (S) sous pression comporte un entraînement (17) de ventilateur.

20. Engin mobile présentant un système d'entraînement (1) selon l'une des revendications précédentes, entraîné par un moteur d'entraînement (32) et en particulier un moteur à combustion interne.

21. Engin mobile selon la revendication 20, **caractérisé en ce que** le système d'entraînement présente en outre une pompe hydraulique de travail (9), entraînée par le moteur d'entraînement (32), d'une hydraulique de travail, la pompe d'alimentation (25) étant disposée dans le train d'entraînement en aval de la pompe hydraulique de travail (9).

22. Engin mobile selon la revendication 20, **caractérisé en ce que** le système d'entraînement présente en outre une pompe hydraulique de travail (9), entraînée par le moteur d'entraînement (32), de l'hydraulique de travail, la pompe d'alimentation (25) étant disposée dans le train d'entraînement en amont de la pompe hydraulique de travail (9).

23. Engin mobile selon l'une des revendications 20 à 22, **caractérisé en ce que** le système d'entraînement comporte en outre une pompe de déplacement (3), entraînée par le moteur d'entraînement (32), d'un entraînement hydrostatique de déplacement, la pompe d'alimentation (25) étant disposée dans le train d'entraînement en aval de la pompe de déplacement (3).

24. Engin mobile selon l'une des revendications 20 à 22, **caractérisé en ce que** le système d'entraînement comporte en outre une pompe de déplacement (3), entraînée par le moteur d'entraînement (32), d'un entraînement hydrostatique de déplacement, la pompe d'alimentation (25) étant disposée dans le train d'entraînement en amont de la pompe de déplacement (3).
